# EUROPEAN PATENT APPLICATION

(11) **EP 4 484 163 A1**
(43) Date of publication of application: **01.01.2025**
(21) Application number: 24185165.8
(22) Date of filing: 27.06.2024
(51) Int. Cl.: B32B 27/12, B32B 5/02, B32B 5/18, B32B 5/24, B32B 27/20, B32B 27/28, B32B 27/32, B32B 27/36, B29C 70/08, B60R 13/02

(54) **PANEL FOR A VEHICLE INTERIOR AND METHOD FOR PRODUCING SAID PANEL**

(30) Priority: 30.06.2023 DE 102023206201
(71) Applicant: Faurecia Innenraum Systeme GmbH, 76767 Hagenbach (DE)
(72) Inventor: BEYOU, Régis, 46182 La Canyada - Valencia (ES); MOCHOLÍ, José, 46026 Valencia (ES); SILVA MORENO, Jose Mauricio, 76185 Karlsruhe (DE)
(74) Representative: Pfenning, Meinig & Partner mbB

(57) **Abstract**

The disclosure concerns a panel (100, 100') for a vehicle interior, the panel (100, 100') comprising a first layer (110) made from a first composite material, the first composite material comprising a first thermoplastic polymer component (112) and a plurality of first natural fibers (111) embedded in the first thermoplastic polymer component (112); and a second layer (120) made from a second composite material, the second composite material comprising a second thermoplastic polymer component (122) and a plurality of second natural fibers (121) embedded in the second thermoplastic polymer component (122). An average length of the first natural fibers (111) is smaller than an average length of the second natural fibers (121). The disclosure further concerns a method for producing such a panel (100, 100').

## Description

The disclosure concerns a panel for a vehicle interior as well as a method for producing such a panel. Panels of the kind disclosed herein may be used, for instance, as trim parts, linings, coverings, or structural parts of vehicle cockpits, doors, columns, roofs, trunks, or other vehicle compartments and components.

The materials used in such panels should ideally be strong, resilient, durable, lightweight, and cost-effective. Natural fiber composite materials, such as natural fiber-reinforced thermoplastics, are increasingly being used as a more sustainable alternative or supplement to conventional materials for vehicle interior panels, such as all-plastic materials or synthetic fiber-reinforced plastics (including carbon-fiber or glass-fiber reinforces plastics). While the use of natural fiber composite materials may improve the ecological footprint of vehicles, further improvements are desirable. In particular, there is a need for products and methods which enable the recycling of natural fiber composite materials or products comprising such materials in order to reduce waste and make more efficient use of the raw materials contained therein.

Accordingly, it is an object of the present disclosure to propose a panel for a vehicle interior that enables the recycling of natural fiber composite materials or products comprising such materials, as well as a method of producing a panel of this type.

This object is obtained by a panel according to claim 1 as well as a method according to claim 9. Specific embodiments are described in the respective dependent claims.

The proposed panel for a vehicle interior comprises
a first layer made from a first composite material, the first composite material comprising a first thermoplastic polymer component and a plurality of first natural fibers embedded in the first thermoplastic polymer component; and
a second layer made from a second composite material, the second composite material comprising a second thermoplastic polymer component and a plurality of second natural fibers embedded in the second thermoplastic polymer component.

An average length of the first natural fibers is smaller than an average length of the second natural fibers.

The first natural fibers contained in the first composite material may be derived from a precursor material containing natural fibers of comparatively longer average length, for instance by grinding or milling the precursor material. The precursor material may be or comprise used products, such as previously used panels, the used products comprising longer natural fibers embedded in a thermoplastic polymer component.

It is thus possible, when producing a panel of the proposed kind, to recycle natural fiber composite materials or products comprising such materials in order to reduce waste and make more efficient use of the raw materials contained therein.

Some or all of the plurality of second natural fibers may be oriented substantially parallel to one another. In particular, the plurality of second natural fibers may form at least one of a woven or non-woven fabric, tissue, knit, scrim, laid structure or the like, said woven or non-woven fabric, tissue, knit, scrim, laid structure or the like comprising at least subsets of the plurality of second natural fibers in a mutually parallel orientation.

The first natural fibers and/or the second natural fibers may be oriented in a substantially random orientation with respect to one another. Multiple subsets of the plurality of first natural fibers and/or multiple subsets of the plurality of second natural fibers, each subset comprising one or several fibers, may be oriented in a substantially random orientation with respect to one another. For instance, if the first natural fibers contained in the first composite material are derived from a precursor material containing natural fibers of comparatively longer average length as mentioned above, in particular by grinding or milling of said precursor material, the grinding or milling process produces grains or particles which may be processed into the first composite material. If the precursor material comprises natural fibers in mutually parallel orientation, the grains or particles may also comprise sets of mutually parallel fibers. However, the sets of mutually parallel fibers are oriented in a substantially random orientation with respect to one another. If the precursor material contains fibers in a random orientation, the first natural fibers are also oriented in a random orientation.

The first layer may further comprise filler particles, in particular glass beads and/or wood flour, embedded in the first thermoplastic polymer component. A density of the filler particles may be lower than a density of the first thermoplastic polymer component.

The first layer may further comprise gas bubbles embedded in the first thermoplastic polymer component. The first layer may comprise a foaming agent to produce the gas bubbles.

The panel may further comprise a support layer. The support layer may be arranged between the first layer and the second layer. The support layer may be arranged on a side of the first layer facing away from the second layer. The support layer may be arranged on a side of the second layer facing away from the first layer. The first layer and/or the second layer may comprise a soft and/or flexible and/or bendable and/or foldable material, which may be supported on the support layer. The support layer may be more rigid than the first layer and/or the second layer. The support layer may itself comprise a soft and/or flexible and/or bendable and/or foldable material; combining the first layer and/or the second layer with the support layer may provide a joint structure with increased rigidity. The first layer and/or the second layer may be a substantially rigid layer. Multiple support layers may be provided.

At least one of the first and second thermoplastic polymer component may be or comprise at least one of polypropylene, polyethylene, polylactic acid, and polyether ether ketone. At least one of the first and second natural fibers may be or comprise at least one of bast fibers, jute fibers, flax fibers, hemp fibers, sisal fibers, kenaf fibers, basalt fibers, coconut fibers, rattan fibers, agave fibers, pineapple fibers, and banana fibers.

The first thermoplastic component may comprise a recycled thermoplastic material. The first thermoplastic component may comprise a new (not recycled) thermoplastic material. For instance, if the first natural fibers contained in the first composite material are derived from a precursor material comprising fibers and a thermoplastic component as described above, an additional supply of a thermoplastic material may be added while producing the first layer to supplement the thermoplastic component present in the precursor material. The additional supply may comprise a recycled and/or new thermoplastic material.

The proposed method for producing a panel of the proposed kind comprises
providing the first composite material, the first composite material being produced by a process comprising grinding or milling a third composite material, the third composite material comprising a third thermoplastic polymer component and a plurality of third natural fibers, wherein an average length of the first natural fibers is smaller than an average length of the third natural fibers, wherein grinding or milling the third composite material converts the third natural fibers to the first natural fibers; and
forming the first layer from the first composite material.

The first layer may be formed from the first composite material by extrusion. The method may comprise joining the first layer, the second layer, and, if provided, the support layer by a lamination process and/or a calendering process.

The proposed panel may be further developed by including features equivalent to or resulting from certain steps of the proposed method; vice versa, the proposed method may include additional steps corresponding to optional features of the proposed panel.

The above, as well as other aspects and advantages of the subject matter of the disclosure will become apparent to those skilled in the art from the following detailed description of exemplary embodiments when considered in the light of the accompanying drawings, in which
FIG. 1A shows, schematically, a cross-sectional view of a panel for a vehicle interior,
FIG. 1B shows, schematically, a cross-sectional view of a panel according to a further example,
FIG. 2A illustrates, schematically, a process for deriving fibers from a precursor material,
FIG. 2B shows, schematically, an apparatus for use in a method for producing the panel of FIG. 1A,
FIG. 2C shows, schematically, an apparatus for use in a method for producing the panel of FIG. 1B.

Recurring and similar features in the drawings are provided with identical alphanumerical reference signs.

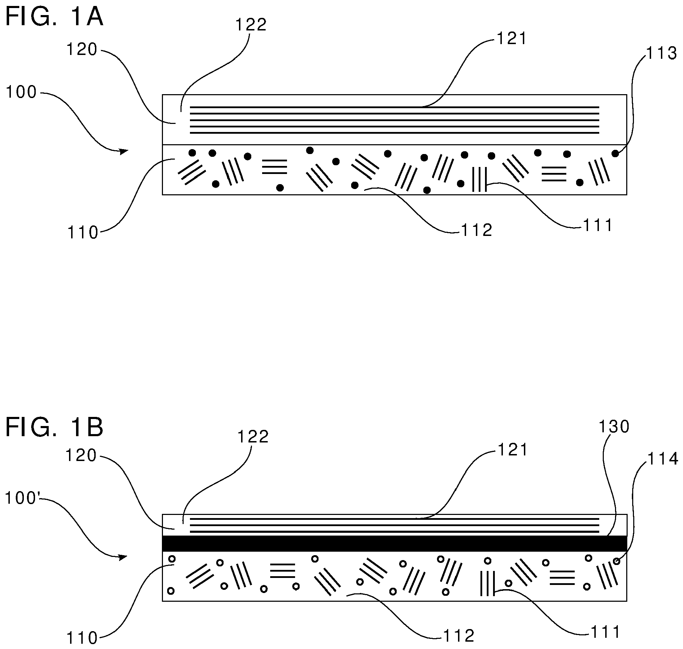

The panel 100 shown in FIG. 1A is an exemplary part for a vehicle interior. The panel 100 comprises a first layer 110 made from a first composite material, the first composite material comprising a first thermoplastic polymer component 112 and a plurality of first natural fibers 111 embedded in the first thermoplastic polymer component 112.

The panel 100 further comprises a second layer 120 made from a second composite material, the second composite material comprising a second thermoplastic polymer component 122 and a plurality of second natural fibers 121 embedded in the second thermoplastic polymer component 122.

By using natural fiber composite materials for the first layer 110 and the second layer 120, a panel 100 with improved sustainability and reduced environmental footprint, in particular CO₂ footprint, is provided compared to the use of conventional materials. Factors contributing to these properties include the regenerating/regrowing nature of nature fiber raw materials, as well as the light weight of natural fiber composite materials (which, in turn, may reduce fuel or energy consumption and associated emission).

An average length of the first natural fibers 111 is smaller than an average length of the second natural fibers 121. (In FIG. 1a, the first and second natural fibers 111, 121, respectively, are shown, for illustration purposes, with a uniform length equaling the average length. In most cases, the lengths of the first and second natural fibers 111, 121 are inhomogenous follow respective length distributions.)

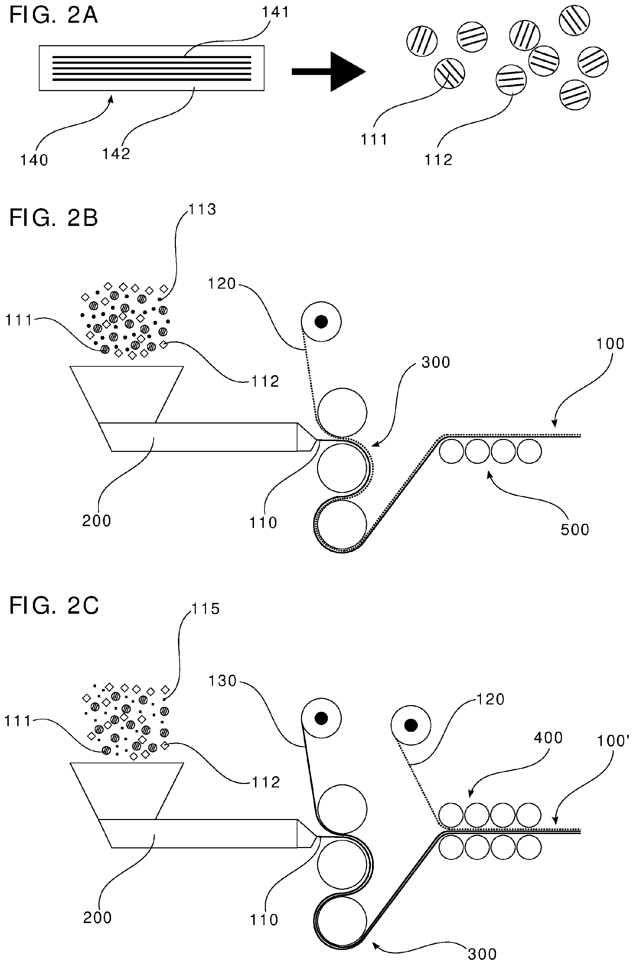

The first natural fibers 111 contained in the first composite material are derived from a precursor material 140 as illustrated in FIG. 2A. The precursor material 140 comprises a plurality of third natural fibers 141 of comparatively longer average length embedded in a third thermoplastic polymer component 142. A process of grinding or milling the precursor material 140 (schematically indicated by an arrow) converts the third natural fibers 141 into the first natural fibers 111. The precursor material 140 may be or comprise used products, such as previously used panels.

Combining a layer with short fibers (layer made with recycled materials) and a layer with long fibers (layer made with new materials) provides a degree of material strength (in particular rigidity, stiffness) as well as robustness (in particular resilience, durability) that may not be achievable, for instance, with a panel comprised entirely of recycled materials. In particular, these properties may be compromised when using a material containing only short fibers resulting from grinding or milling a used product. It is thus possible, when producing a panel 100 as described, to recycle natural fiber composite materials or products comprising such materials in order to reduce waste, make more efficient use of the raw materials contained therein, and produce the panel 100 in a cost-effective manner.

The plurality of second natural fibers 121 forms at least one of a woven or non-woven fabric, tissue, knit, scrim, laid structure or the like, said woven or non-woven fabric, tissue, knit, scrim, laid structure or the like comprising subsets of the plurality of second natural fibers 121 in a mutually parallel orientation. In further examples, the plurality of second natural fibers 121 may be oriented in a substantially random orientation with respect to one another. In either case, the plurality of second natural fibers 121 acts as a reinforcement component for the panel 100, increasing the aforementioned properties related to material strength and robustness.

As shown in FIG. 1A, multiple subsets of the plurality of first natural fibers 111, each subset comprising several fibers, are oriented in a substantially random orientation with respect to one another. In particular, because the first natural fibers 111 contained in the first composite material are derived from the precursor material 140 containing third natural fibers 141 of comparatively longer average length as mentioned above, in particular by grinding or milling of said precursor material, the grinding or milling process produces grains or particles (cf. FIG. 2A) which are subsequently processed into the first composite material (cf. FIG. 2B/C). Because the precursor material 140, in the present example, comprises third natural fibers 142 in mutually parallel orientation, the grains or particles also comprise sets of mutually parallel first natural fibers 111. However, the sets of mutually parallel first natural fibers 111 are oriented in a substantially random orientation with respect to one another since the grains or particles are incorporated into the first layer 110 in random orientations. In further examples, the third natural fibers 141 may be oriented in a substantially random orientation with respect to one another. In that case, the first natural fibers 111 derived from the third natural fibers 141 of the precursor material are also oriented in a substantially random orientation with respect to one another.

The first layer 110 further comprise filler particles 113, in particular glass beads and/or wood flour, embedded in the first thermoplastic polymer component 112. A density of the filler particles 113 is lower than a density of the first thermoplastic polymer component 112. The use of filler particles may contribute to achieving desired material properties. In particular, the filler particles 113 of lower density than the first thermoplastic polymer component 112 may reduce the weight of the panel 100 while maintaining desirable mechanical properties, thus contributing to a reduced environmental footprint.

The first and second thermoplastic polymer components 112, 122 are made from polypropylene. However, alternative or additional thermoplastic materials or combinations thereof may be used, such as polyethylene, polylactic acid, or polyether ether ketone. The first thermoplastic polymer component 112 may comprise a different material combination than the second thermoplastic polymer component 122. The first and second natural fibers 111, 121 are bast fibers. However, alternative or additional natural fibers may be used, such as jute fibers, flax fibers, hemp fibers, sisal fibers, kenaf fibers, basalt fibers, coconut fibers, rattan fibers, agave fibers, pineapple fibers, or banana fibers. The first natural fibers 111 may be different from the second natural fibers 121.

The panel 100' shown in FIG. 1B is largely similar to the panel 100 shown in FIG. 1A. The following description is therefore limited to the differences.

Instead of the filler particles 113 of the panel 100, the first layer 110 of the panel 100' comprises gas bubbles 114 embedded in the first thermoplastic polymer component 112. The first layer comprises a foaming agent (cf. FIG. 2C and its description) to produce the gas bubbles 114. The use of gas bubbles 114 instead of filler particles 113 further reduces the weight of the panel 100', while potentially offering a different tradeoff regarding material properties.

The first layer 110 and the second layer 120 of the panel 100' are less rigid than those of the panel 100. In particular, the second layer comprises a soft, bendable material. The panel 100' further comprises a support layer 130 arranged between the first layer 110 and the second layer 120 such as to additionally support the first layer 110 and the second layer 120. The support layer 130 is more rigid than at least the second layer120. The support layer 130 may alternatively be arranged in a different position, for instance, on a side of the first layer 110 facing away from the second layer 120 or on a side of the second layer 120 facing away from the first layer 110. Multiple support layers may be provided.

In the following, a method for producing the panel 100 shown in FIG. 1A is described with reference to FIG. 2A and 2B.

A first step of the method (FIG. 2A) comprises providing the first composite material, the first composite material being produced by a process comprising grinding a third composite material (namely the precursor material 140), the third composite material comprising the third thermoplastic polymer component 142 and the plurality of third natural fibers141, wherein, as noted above, an average length of the first natural fibers 111 is smaller than an average length of the third natural fibers 141.

A second step of the method (FIG. 2B) comprises forming the first layer 110 from the first composite material. The first layer 110 is formed from the first composite material by extrusion using an extruder 200. To this end, the grains or particles of the first thermoplastic polymer component 112, containing the first natural fibers 111 embedded therein, are fed into the extruder 200, along with additional particles of the thermoplastic polymer component 112 (without embedded fibers) and the filler particles 113. The additional particles of the thermoplastic polymer component 112 provide an additional supply of thermoplastic material to supplement the third thermoplastic polymer component 142 present in the precursor material 140. The additional particles of the thermoplastic polymer component 112 may comprise a recycled thermoplastic material and/or a new thermoplastic material. The additional particles of the thermoplastic polymer component 112 may be omitted if the grains or particles of the first thermoplastic polymer component 112 containing the first natural fibers 111 contain a sufficient amount of the first thermoplastic polymer component 112 to form the first layer 110.

In this example, the material composition of the third thermoplastic polymer component 142 is identical to the first thermoplastic polymer component 112. The material composition of the third natural fibers is identical to the material composition of the first natural fibers 111. In different examples, the first thermoplastic polymer component 112 may comprise a different material combination than the third thermoplastic polymer component and/or the first natural fibers 111 may be different from the third natural fibers.

In a third step of the method, the first layer 110 exits the extruder 200 and is fed, together with the provided second layer 120, into a roller press 300 for joining the first layer 110 and the second layer 120 by lamination to form the panel 100, which is transported to a point of further use by a conveyor mechanism 500.

FIG. 2B illustrates a modified version of the method, used for producing the panel 100'. The first step is as described above. In the second step, instead of the filler particles 113, the foaming agent 115 for forming the gas bubbles 114 is fed into the extruder 200 along with the other components described above.

In the third step, after exiting the extruder 200, the first layer 110 is combined with the support layer 130 and fed into the roller press for joining the first layer 110 and the support layer 130 into an intermediate product. The intermediate product

In a fourth step of the method, the intermediate product is fed, together with the second layer 120, into a calender 400 for joining the intermediate product and the second layer 120 by calendaring to form the panel 100'.

List of reference signs:
100, 100' panel,
110 first layer,
111 first natural fibers,
112 first thermoplastic polymer component,
113 filler particles,
114 gas bubbles,
115 foaming agent,
120 second layer,
121 second natural fibers,
122 second thermoplastic polymer component,
130 support layer,
140 precursor material,
141 third natural fibers,
142 third thermoplastic polymer component,
200 extruder,
300 roller press,
400 calender,
500 conveyor mechanism.

## Claims

1. A panel (100, 100') for a vehicle interior, the panel (100, 100') comprising
a first layer (110) made from a first composite material, the first composite material comprising
a first thermoplastic polymer component (112) and
a plurality of first natural fibers (111) embedded in the first thermoplastic polymer component (112); and
a second layer (120) made from a second composite material, the second composite material comprising
a second thermoplastic polymer component (122) and
a plurality of second natural fibers (121) embedded in the second thermoplastic polymer component (122);
wherein an average length of the first natural fibers (111) is smaller than an average length of the second natural fibers (121).

2. The panel (100, 100') according to claim 1, wherein the first natural fibers (111) and/or the second natural fibers (121) are oriented in a substantially random orientation with respect to one another and/or wherein multiple subsets of the plurality of first natural fibers (111) and/or multiple subsets of the plurality of second natural fibers (121), each subset comprising one or several fibers, are oriented in a substantially random orientation with respect to one another.

3. The panel (100, 100') according to any one of the preceding claims, wherein the first layer (110) further comprises a plurality of filler particles (113), in particular glass beads and/or wood flour, embedded in the first thermoplastic polymer component (112).

4. The panel (100, 100') according to claim 3, wherein a density of the filler particles (113) is lower than a density of the first thermoplastic polymer component (112).

5. The panel (100, 100') according to any one of the preceding claims, wherein the first layer (110) further comprises gas bubbles (114) embedded in the first thermoplastic polymer component (112).

6. The panel (100, 100') according to claim 5, wherein the first layer (110) comprises a foaming agent (115) to produce the gas bubbles (114).

7. The panel (100, 100') according to any one of the preceding claims, further comprising a support layer (130).

8. The panel (100, 100') according to any one of the preceding claims, wherein at least one of the first and second thermoplastic polymer component (112, 122) is or comprises at least one of polypropylene, polyethylene, polylactic acid, and polyether ether ketone and/or wherein at least one of the first and second natural fibers (111, 121) are or comprise at least one of bast fibers, jute fibers, flax fibers, hemp fibers, sisal fibers, kenaf fibers, basalt fibers, coconut fibers, rattan fibers, agave fibers, pineapple fibers, and banana fibers.

9. The panel (100, 100') according to any one of the preceding claims, wherein the first thermoplastic polymer component (112) comprises a recycled thermoplastic material.

10. A method for producing a panel (100, 100') according to any one of the preceding claims, the method comprising
providing the first composite material, the first composite material being produced by a process comprising grinding or milling a third composite material, the third composite material comprising a third thermoplastic polymer component (142) and a plurality of third natural fibers (141), wherein an average length of the first natural fibers (111) is smaller than an average length of the third natural fibers (141), wherein grinding or milling the third composite material converts the third natural fibers (141) to the first natural fibers (111); and
forming the first layer (110) from the first composite material.

11. The method according to claim 10, wherein the first layer (110) is formed from the first composite material by extrusion.

12. The method according to claim 10 or 11, the method comprising joining the first layer (110), the second layer (120), and, if provided, the support layer (130) by a lamination process and/or a calendering process.
